# EUROPEAN PATENT SPECIFICATION

(11) **EP 2 246 356 B1**
(45) Date of publication and mention of the grant of the patent: **03.04.2013**
(21) Application number: 09701946.7
(22) Date of filing: 14.01.2009
(51) Int. Cl.: C07F 9/6509, C07B 57/00, C07B 61/00

(54) **PROCESS FOR PRODUCTION OF OPTICALLY ACTIVE AMINES**
VERFAHREN ZUR HERSTELLUNG OPTISCH AKTIVER AMINE
PROCÉDÉ DE FABRICATION D'AMINES OPTIQUEMENT ACTIVES

(30) Priority: 18.01.2008 JP 2008009692
(43) Date of publication of application: 03.11.2010
(73) Proprietor: Sumitomo Chemical Company, Limited, Tokyo 104-8260 (JP); Carreira, Erick M., Zurich (CH)
(72) Inventor: CARREIRA, Erick M., Zurich (CH); FUKUYO, Shoji, Okayama 711-0906 (JP); KADONO, Hiroshi, Nishinomiya-shi Hyogo 662-0811 (JP); MURAKAMI, Kazuo, Kashiba-shi Nara 639-0222 (JP)
(74) Representative: Duckworth, Timothy John
(86) International application number: PCT/JP2009/050382
(87) International publication number: WO 2009/090957

(56) References cited:
- WO-A1-2005/121157
- JP-A- 2000 191 676
- JP-A- 2006 347 884
- KNOEPFEL T.F. ET AL.: 'Readily Available Biaryl P, N Ligands for Asymmetric Catalysis' ANGEWANDTE CHEMIE INTERNATIONAL EDITION vol. 43, 2004, pages 5971 - 5973, XP002352744

## Description

### Technical Field

The present invention relates to an optically active amine and a production method thereof.

### Background Art

[4-(2-Diphenylphosphanylnaphthalen-1-yl)phthalazin-1-yl]-(1-phenylethyl)amine (hereinafter to be abbreviated as N-PINAP) contains four optical isomers represented by the following formulas (1) to (4).

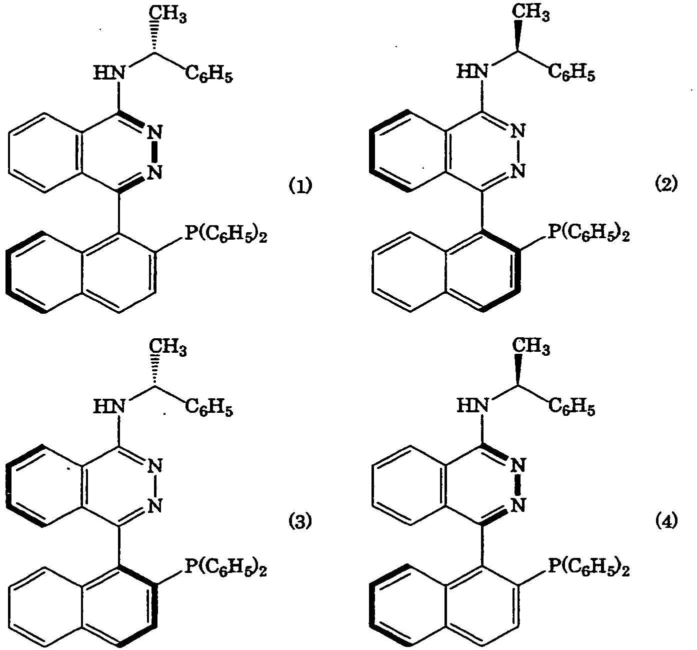

Non-patent document 1 discloses that a desired product is obtained with high selectivity and in a high yield by an asymmetric reaction such as an asymmetric addition reaction, an asymmetric conjugate addition reaction, an asymmetric hydroboration reaction and the like, using an asymmetric transition metal complex containing an optically active amine as an asymmetric ligand.

Patent document 1 discloses that these optically active amines are obtained by separating the diastereomixture by column chromatography. Specifically, the optically active amine represented by the formula (1) is obtained by dissolving the R-N-PINAP diastereomixture (a mixture of the optically active amine represented by the formula (1) and the optically active amine represented by the formula (3)) in a mixed solvent of toluene and dichloromethane, adding hexane to the obtained solution to allow crystallization of the optically active amine represented by the formula (3), and then subjecting the filtrate to column chromatography.
Patent document 1: JP-A-2006-347884
Non-patent document 1: Angew. Chem. Int. Ed., 2004, 43, 5971

### Disclosure of the Invention

The present invention provides <1> a salt of an optically active [4-(2-diphenylphosphanylnaphthalen-1-yl)phthalazin-1-yl]-(1-phenylethyl)amine with an optically active organic sulfonic acid;

<2> the salt of <1>, wherein the optically active [4-(2-diphenylphosphanylnaphthalen-1-yl)phthalazin-1-yl]-(1-phenylethyl)amine is an optically active amine represented by the formula (1):

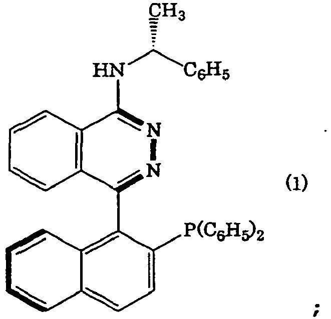

<3> the salt of <1> or <2>, wherein the optically active organic sulfonic acid is (S)-camphorsulfonic acid;

<4> a method of producing a salt of an optically active amine represented by the formula (1):

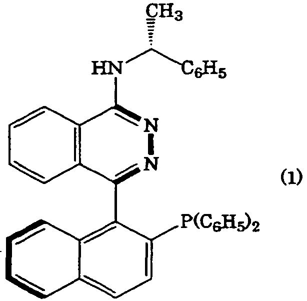

with an optically active organic sulfonic acid, which comprises mixing a solution containing the optically active amine represented by the formula (1) and an optically active amine represented by the formula (3):

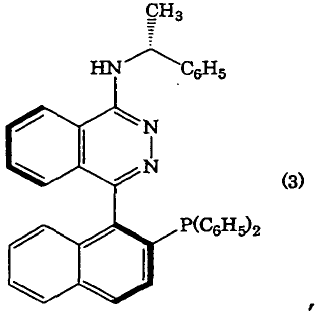

with an optically active organic sulfonic acid;
<5> the method of <4>, wherein the amount of the optically active organic sulfonic acid to be used is 0.5 to 5 mol per 1 mol of the total of the optically active amine represented by the formula (1) and the optically active amine represented by the formula (3);
<6> the method of <4> or <5>, wherein the optically active organic sulfonic acid is (S)-camphorsulfonic acid;
<7> the method of <4>, <5> or <6>, wherein the solution is an ether solution or a ketone solution;

<8> a method of producing an optically active amine represented by the formula (3):

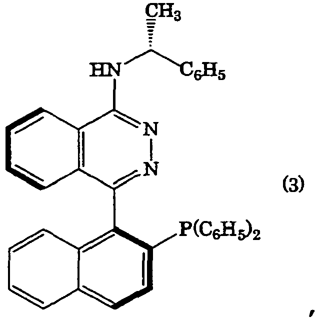

which comprises mixing a solution containing an optically active amine represented by the formula (1):

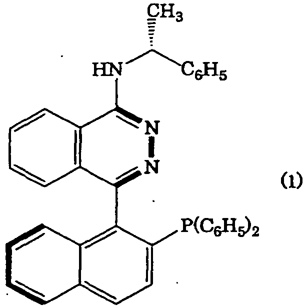

and the optically active amine represented by the formula (3) in a hydrophilic organic solvent, with water;
<9> the method of <8>, wherein the solution is a reaction solution obtained by reacting a compound represented by the formula (5):

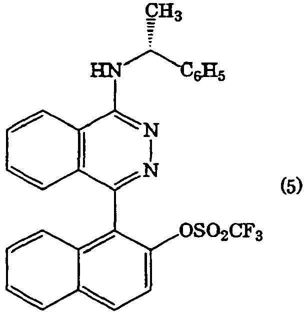

with diphenylphosphine in a hydrophilic organic solvent, in the presence of a transition metal complex and a tertiary amine;
<10> the method of <8> or <9>, wherein the amount of the water to be used is 0.1 to 0.5 part by weight per 1 part by weight of the hydrophilic organic solvent;
<11> the method of <8>, <9> or <10>, wherein the hydrophilic organic solvent is a hydrophilic aprotic polar solvent;
<12> the method of <9>, <10> or <11>, wherein the transition metal complex is a divalent nickel complex containing a phosphine compound;

<13> the salt of <1>, wherein the optically active [4-(2-diphenylphosphanylnaphthalen-1-yl)phthalazin-1-yl]-(1-phenylethyl)amine is an optically active amine represented by the formula (2):

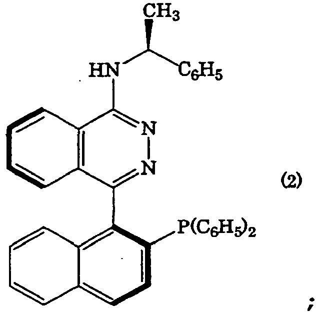

<14> the salt of <1> or <13>, wherein the optically active organic sulfonic acid is (R)-camphorsulfonic acid;

<15> a method of producing a salt of an optically active amine represented by the formula (2):

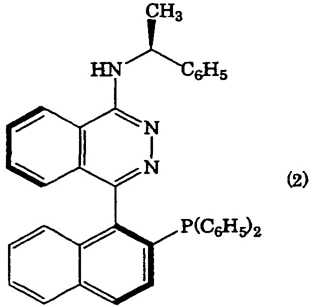

with an optically active organic sulfonic acid, which comprises mixing a solution containing the optically active amine represented by the formula (2) and an optically active amine represented by the formula (4):

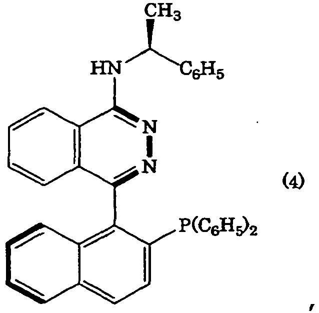

with an optically active organic sulfonic acid;
<16> the method of <15>, wherein the amount of the optically active organic sulfonic acid to be used is 0.5 to 5 mol per 1 mol of the total of the optically active amine represented by the formula (2) and the optically active amine represented by the formula (4);
<17> the method of <15> or <16>, wherein the optically active organic sulfonic acid is (R)-camphorsulfonic acid;
<18> the method of <15>, <16> or <17>, wherein the solution is an ether solution or a ketone solution;

<19> a method of producing an optically active amine represented by the formula (4):

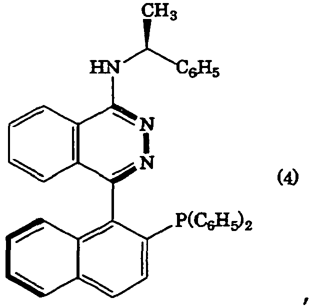

which comprises mixing a solution containing an optically active amine represented by the formula (2):

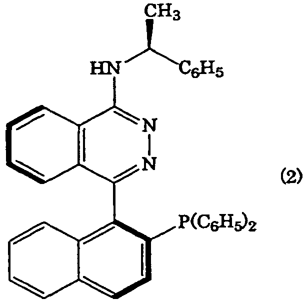

and the optically active amine represented by the formula (4) in a hydrophilic organic solvent, with water;
<20> the method of <19>, wherein the solution is a reaction solution obtained by reacting a compound represented by the formula (6):

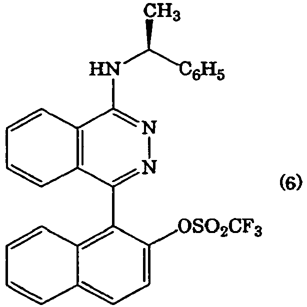

with diphenylphosphine in a hydrophilic organic solvent, in the presence of a transition metal complex and a tertiary amine;
<21> the method of <19> or <20>, wherein the amount of the water to be used is 0.1 to 0.5 part by weight per 1 part by weight of the hydrophilic organic solvent;
<22> the method of <19>, <20> or <21>, wherein the hydrophilic organic solvent is a hydrophilic aprotic polar solvent;
<23> the method of <20>, <21> or <22>, wherein the transition metal complex is a divalent nickel complex containing a phosphine compound;

<24> a method of producing an optically active [4-(2-diphenylphosphanylnaphthalen-1-yl)phthalazin-1-yl]-(1-phenylethyl)amine, which comprises reacting a salt of an optically active [4-(2-diphenylphosphanylnaphthalen-1-yl)phthalazin-1-yl]-(1-phenylethyl)amine with an optically active organic sulfonic acid, with a base; and the like.

### Best Mode for Carrying out the Invention

A salt of an optically active N-PINAP with an optically active organic sulfonic acid is a novel compound, and can be produced by mixing an optically active N-PINAP with an optically active organic sulfonic acid.

Examples of the salt of an optically active N-PINAP with an optically active organic sulfonic acid include a salt of an optically active amine represented by the formula (1):

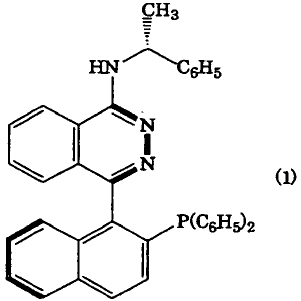

(hereinafter to be abbreviated as (R,P)-N-PINAP) with an optically active organic sulfonic acid, and a salt of an optically active amine represented by the formula (2):

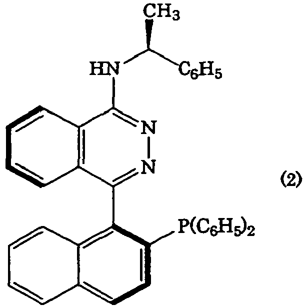

(hereinafter to be abbreviated as (S,M)-N-PINAP) with an optically active organic sulfonic acid.

Examples of the optically active organic sulfonic acid include optically active camphorsulfonic acids such as (S)-camphorsulfonic acid [(1S)-(+)-10-camphorsulfonic acid], (R)-camphorsulfonic acid [(1R)-(-)-10-camphorsulfonic acid], (+)-3-bromocamphor-8-sulfonic acid, (+)-3-bromocamphor-10-sulfonic acid, (-)-3-bromocamphor-8-sulfonic acid, (-)-3-bromocamphor-10-sulfonic acid and the like, and an ammonium salt thereof; optically active 1-phenylalkylsulfonic acids such as (S)-1-phenylethanesulfonic acid, (R)-1-phenylethanesulfonic acid, (S)-1-phenylpropanesulfonic acid, (R)-1-phenylpropanesulfonic acid and the like, and an ammonium salt thereof; and the like.

A solution (hereinafter to be abbreviated as solution (R)) containing (R,P)-N-PINAP and an optically active amine represented by the formula (3):

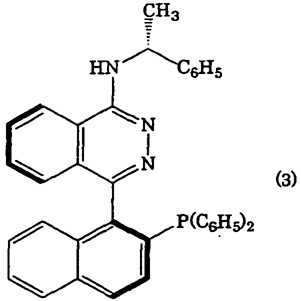

(hereinafter to be abbreviated as (R,M)-N-PINAP) is mixed with an optically active organic sulfonic acid, which allows preferential crystallization of a salt of (R,P)-N-PINAP with the optically active organic sulfonic acid. Then the crystallized salt of (R,P)-N-PINAP with the optically active organic sulfonic acid can be isolated by a conventional separation means such as filtration and the like. For example, the solution (R) is mixed with (S)-camphorsulfonic acid, which allows preferential crystallization of a salt of (R,P)-N-PINAP with (S)-camphorsulfonic acid.

A solution (hereinafter to be abbreviated as solution (S)) containing (S,M)-N-PINAP and an optically active amine represented by the formula (4):

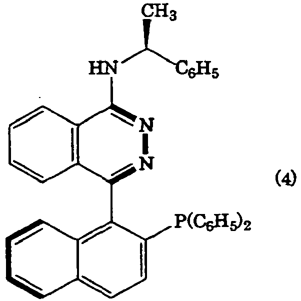

(hereinafter to be abbreviated as (S,P)-N-PINAP) is mixed with an optically active organic sulfonic acid, which allows preferential crystallization of a salt of (S,M)-N-PINAP with the optically active organic sulfonic acid. Then the crystallized salt of (S,M)-N-PINAP with the optically active organic sulfonic acid can be isolated by a conventional separation means such as filtration and the like. For example, the solution (S) is mixed with (R)-camphorsulfonic acid, which allows preferential crystallization of a salt of (S,M)-N-PINAP with (R)-camphorsulfonic acid.

The amount of the optically active organic sulfonic acid to be used is generally 0.5 to 5 mol, preferably 0.8 to 2 mol, per 1 mol of the total of (R,P)-N-PINAP and (R,M)-N-PINAP or the total of (S,M)-N-PINAP and (S,P)-N-PINAP.

The optically active organic sulfonic acid may be directly used as a solid or in the form of a solution. When (S)- or (R)-camphorsulfonic acid is used as an optically active organic sulfonic acid, the optically active organic sulfonic acid is preferably used in the form of a solution.

The ratio of (R,P)-N-PINAP and (R,M)-N-PINAP in the solution (R) is not limited. Also, the ratio of (S,M)-N-PINAP and (S,P)-N-PINAP in the solution (S) is not limited.

Examples of the solvent contained in the solution (R) or solution (S) include ether solvents such as tetrahydrofuran and the like; and ketone solvents such as acetone, methyl ethyl ketone, methyl isobutyl ketone and the like. From the aspect of the yield, an ether solvent is preferable, and tetrahydrofuran is more preferable.

The amount of the solvent to be used is generally 5 to 50 parts by weight, preferably 10 to 40 parts by weight, per 1 part by weight of the total of (R,P)-N-PINAP and (R,M)-N-PINAP or per 1 part by weight of the total of (S,M)-N-PINAP and (S,P)-N-PINAP.

The mixing of the solution (R) or solution (S) with the optically active organic sulfonic acid is preferably performed by adding (preferably adding dropwise) the optically active organic sulfonic acid to the solution (R) or solution (S).

The temperature for the mixing of the solution (R) or solution (S) with the optically active organic sulfonic acid is generally 30 to 65°C, preferably 35 to 60°C.

After mixing, the mixture is stirred for generally 5 min to 24 hr, preferably 30 min to 10 hr, and then aged generally at 0 to 55°C, preferably 5 to 35°C. The precipitated crystals are isolated by a conventional separation means such as filtration and the like, and, where necessary, washed with a solvent such as tetrahydrofuran, acetone, methyl ethyl ketone, methyl isobutyl ketone and the like, preferably tetrahydrofuran to give a salt of (R,P)-N-PINAP with the optically active organic sulfonic acid, or a salt of (S,M)-N-PINAP with the optically active organic sulfonic acid.

The obtained salt of the optically active N-PINAP with the optically active organic sulfonic acid is reacted with a base to give (R,P)-N-PINAP or (S,M)-N-PINAP. Specifically, the salt of (R,P)-N-PINAP with the optically active organic sulfonic acid is reacted with a base to give (R,P)-N-PINAP, and the salt of (S,M)-N-PINAP with the optically active organic sulfonic acid is reacted with a base to give (S,M)-N-PINAP.

Examples of the base include inorganic bases such as alkali metal hydroxides (e.g., sodium hydroxide, potassium hydroxide and the like); alkali metal carbonates (e.g., sodium carbonate, potassium carbonate and the like) and the like. The amount thereof to be used is 1 equivalent or more relative to the salt of the optically active N-PINAP with the optically active organic sulfonic acid, with no upper limitation. The base is generally used in the form of an aqueous solution.

The reaction of the salt of the optically active N-PINAP with the optically active organic sulfonic acid, with a base is generally carried out in a solvent. Examples of the solvent include aromatic solvents such as toluene, xylene, chlorobenzene, dichlorobenzene and the like; halogenated hydrocarbon solvents such as dichloromethane, chloroform and the like; and ether solvents such as diethyl ether, methyl tert-butyl ether, cyclopentyl methyl ether and the like.

After the completion of the reaction, water is added to the reaction mixture as necessary, and the mixture is partitioned to give the organic layer containing (R,P)-N-PINAP or (S,M)-N-PINAP. The obtained organic layer is concentrated, and a poor solvent such as heptane, hexane and the like is added to the obtained concentrated residue to crystallize (R,P)-N-PINAP or (S,M)-N-PINAP. (R,P)-N-PINAP or (S,M)-N-PINAP can be isolated by a conventional separation means such as filtration and the like. Alternatively, the aforementioned concentrated residue is dissolved in methyl isobutyl ketone, methyl ethyl ketone and the like, and a poor solvent such as heptane, hexane and the like is added to the obtained solution to crystallize (R,P)-N-PINAP or (S,M)-N-PINAP. As used herein, the "poor solvent" means a solvent that does not dissolve or hardly dissolve (R,P)-N-PINAP or (S,M)-N-PINAP.

In addition, the obtained (R,P)-N-PINAP or (S,M)-N-PINAP is recrystallized from a solvent such as acetonitrile, methyl ethyl ketone, ethyl acetate, toluene, tetrahydrofuran and the like to give crystals having a higher purity.

The thus-obtained (R,P)-N-PINAP or (S,M)-N-PINAP has an optical purity of generally 95/5 or more, particularly 98/2 or more, of (R,P)/(R,M) or (S,M)/(S,P).

A solution containing (R,P)-N-PINAP and (R,M)-N-PINAP in a hydrophilic organic solvent is mixed with water, which allows preferential crystallization of (R,M)-N-PINAP. A solution containing (S,P)-N-PINAP and (S,M)-N-PINAP in a hydrophilic organic solvent is mixed with water, which allows preferential crystallization of (S,P)-N-PINAP.

The hydrophilic organic solvent is preferably a comparatively higher polar solvent, particularly a hydrophilic aprotic polar solvent, and examples thereof include hydrophilic amide solvents such as N,N-dimethylformamide, N-methylpyrrolidone, N,N-dimethylacetamide and the like; hydrophilic sulfoxide solvents such as dimethyl sulfoxide and the like; hydrophilic ether solvents such as tetrahydrofuran and the like; hydrophilic nitrile solvents such as acetonitrile and the like, and the like. Of these, a hydrophilic amide solvent is preferable, and N,N-dimethylformamide is more preferable. The solvent may be used in a mixture of two or more kinds thereof.

The amount of the hydrophilic organic solvent to be used is preferably 0.2 to 50 parts by weight, more preferably 2 to 20 parts by weight, per 1 part by weight of the total of (R,P)-N-PINAP and (R,M)-N-PINAP or the total of (S,P)-N-PINAP and (S,M)-N-PINAP, from the aspects of operability and economy.

The amount of the water to be used is preferably 0.1 to 0.5 part by weight, more preferably 0.2 to 0.4 part by weight, per 1 part by weight of the hydrophilic organic solvent, from the aspects of the purity and yield of the obtained crystals.

The mixing of the solution containing (R,P)-N-PINAP and (R,M)-N-PINAP in a hydrophilic organic solvent with water is preferably performed by adding (preferably adding dropwise) water to the solution containing (R,P)-N-PINAP and (R,M)-N-PINAP in a hydrophilic organic solvent. The mixing of the solution containing (S,P)-N-PINAP and (S,M)-N-PINAP in a hydrophilic organic solvent with water is also preferably performed by adding (preferably adding dropwise) water to the solution containing (S,P)-N-PINAP and (S,M)-N-PINAP in a hydrophilic organic solvent.

The temperature for the mixing of the solution containing (R,P)-N-PINAP and (R,M)-N-PINAP in a hydrophilic organic solvent or the solution containing (S,P)-N-PINAP and (S,M)-N-PINAP in a hydrophilic organic solvent with water is generally 0 to 100°C, preferably 60 to 95°C.

After the completion of the mixing, the mixture is stirred generally for 5 min to 24 hr, preferably 30 min to 5 hr, cooled generally to 0 to 50°C, preferably 5 to 35°C, and aged. The precipitated crystals are isolated by a conventional separation means such as filtration and the like, and, where necessary, washed with a mixed solvent of a hydrophilic organic solvent and water, or a lower alcohol solvent such as isopropanol and the like (preferably isopropanol) to give crystals of (R,M)-N-PINAP or (S,P)-N-PINAP.

The thus-obtained (R,M)-N-PINAP or (S,P)-N-PINAP has an optical purity of generally 95/5 or more, particularly 98/2 or more, of (R,M)/(R,P) or (S,P)/(S,M).

The obtained filtrate is mixed with water in an amount of 0.1 to 1 part by weight per 1 part by weight of the hydrophilic organic solvent in the filtrate, which allows precipitation of secondary crystals of (R,M)-N-PINAP or (S,P)-N-PINAP. The precipitated crystals are isolated by a conventional separation means such as filtration and the like, and, where necessary, purified by a conventional purification means such as recrystallization and the like to give crystals of (R,M)-N-PINAP or (S,P)-N-PINAP.

Moreover, the obtained filtrate is subjected to solvent substitution, and the solution is mixed with an optically active organic sulfonic acid to give a salt of the optically active N-PINAP with the optically active organic sulfonic acid.

As a solution containing (R,P)-N-PINAP and (R,M)-N-PINAP in a hydrophilic organic solvent, the reaction solution obtained by the below-mentioned production method of the mixture of (R,P)-N-PINAP and (R,M)-N-PINAP can be used.

A mixture of (R,P)-N-PINAP and (R,M)-N-PINAP (hereinafter to be abbreviated as (R)-N-PINAP) can be produced, for example, by reacting a compound represented by the formula (5):

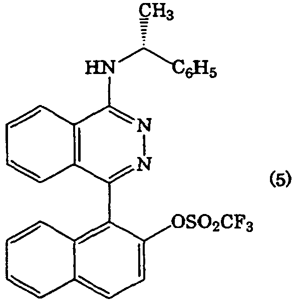

(hereinafter to be abbreviated as compound (5)) with diphenylphosphine in a hydrophilic organic solvent, in the presence of a transition metal complex and a tertiary amine.

The hydrophilic organic solvent is preferably a comparatively higher polar solvent, particularly a hydrophilic aprotic polar solvent, from the aspects of the reactive property. Examples thereof include hydrophilic amide solvents such as N,N-dimethylformamide, N-methylpyrrolidone, N,N-dimethylacetamide and the like; hydrophilic sulfoxide solvents such as dimethyl sulfoxide and the like; hydrophilic ether solvents such as tetrahydrofuran and the like; hydrophilic nitrile solvents such as acetonitrile and the like, and the like. Of these, a hydrophilic amide solvent is preferable, and N,N-dimethylformamide is more preferable. The hydrophilic organic solvent may be used in a mixture of two or more kinds thereof.

The amount of the hydrophilic organic solvent to be used is generally 0.2 to 50 parts by weight, preferably 2 to 20 parts by weight, per 1 part by weight of compound (5).

The amount of the diphenylphosphine to be used is generally 1 to 10 mol, preferably 1 to 3 mol, per 1 mol of compound (5), from the aspects of the completion of the reaction and economy.

Examples of the transition metal complex include divalent nickel complexes containing a phosphine compound (particularly a dicoordinate phosphine compound) such as (diphenylphosphinoethane)dichloronickel, (diphenylphosphinopropane)dichloronickel, (diphenylphosphinobutane)dichloronickel and the like; divalent palladium complexes containing a phosphine compound (particularly a dicoordinate phosphine compound) such as (diphenylphosphinoethane)dichloropalladium, (diphenylphosphinopropane)dichloropalladium, (diphenylphosphinobutane)dichloropalladium and the like, and the like. Of these, a divalent nickel complex containing a phosphine compound is preferable, and (diphenylphosphinoethane)dichloronickel is more preferable, from the aspects of the reaction rate and economy.

The amount of the transition metal complex to be used is generally 0.001 to 1 mol, preferably 0.01 to 0.2 mol, per 1 mol of compound (5), from the aspects of the reaction rate and economy.

The tertiary amine may be any as long as it can trap by produced trifluoromethanesulfonic acid, and examples thereof include 1,4-diazabicyclo[2.2.2]octane, diisopropylethylamine, triethylamine and the like. Of these, 1,4-diazabicyclo[2.2.2]octane is preferable.

The amount of the tertiary amine to be used is generally 1 to 30 mol, preferably 2 to 10 mol, per 1 mol of compound (5), to suppress by-products and from the economical aspects.

The reaction of compound (5) with diphenylphosphine is generally carried out by mixing compound (5) with diphenylphosphine, a transition metal complex and a tertiary amine, where the order of mixing is not limited. For example, a mixture of compound (5) and a tertiary amine may be added to a mixture of diphenylphosphine and a transition metal complex. Alternatively, a mixture of diphenylphosphine and a transition metal complex may be added to a mixture of compound (5) and a tertiary amine.

The reaction temperature is generally 60°C to 180°C, preferably 80°C to 140°C. While the reaction time varies depending on the starting material to be used and the reaction temperature, it is generally 10 min to 40 hr, preferably 30 min to 24 hr.

After the completion of the reaction, the obtained reaction solution is subjected to a conventional posttreatment such as extraction, concentration and the like to isolate (R)-N-PINAP.

A mixture of (S,P)-N-PINAP and (S,M)-N-PINAP (hereinafter to be abbreviated as (S)-N-PINAP) can be produced, for example, by reacting a compound represented by the formula (6):

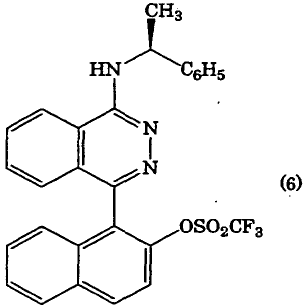

(hereinafter to be abbreviated as compound (6)) with diphenylphosphine in a hydrophilic organic solvent, in the presence of a transition metal complex and a tertiary amine. The reaction of compound (6) with diphenylphosphine can be carried out in the same manner as in the above-mentioned reaction of compound (5) with diphenylphosphine.

Compound (5) can be produced by reacting a compound represented by the formula (7):

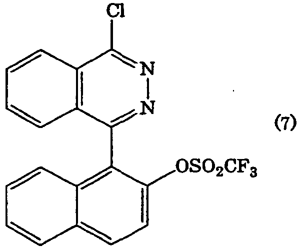

(hereinafter to be abbreviated as compound (7)) with (R)-1-phenylethylamine. Compound (6) can be produced by reacting compound (7) with (S)-1-phenylethylamine.

The amount of the (R)- or (S)-1-phenylethylamine to be used is generally 1 to 10 mol, preferably 2 to 5 mol, per 1 mol of compound (7).

The reaction of compound (7) with (R)- or (S)-1-phenylethylamine is carried our without a solvent or in a solvent. The solvent is not limited as long as it does not inhibit the reaction, and examples thereof include aromatic hydrocarbon solvents such as xylene, toluene and the like; ether solvents such as 1,4-dioxane and the like, and the like. From the aspects of shortened reaction time and yield, an aromatic hydrocarbon solvent is preferable, and xylene is more preferable. The amount of the solvent to be used is generally 0.5 to 50 parts by weight, preferably 1 to 15 parts by weight, per 1 part by weight of compound (7).

The reaction temperature is generally 80 to 200°C, preferably 100 to 150°C. While the reaction time varies depending on the starting material to be used and the reaction temperature, it is generally 1 to 50 hr, preferably 4 to 30 hr.

After the completion of the reaction, the obtained reaction solution is mixed with water and a poor solvent such as an aliphatic hydrocarbon solvent (e.g. heptane, hexane and the like) and the like to give compound (5) or compound (6) as crystals. As used herein, the poor solvent means a solvent that does not dissolve or hardly dissolve compound (5) or compound (6).

### Examples

The present invention is explained in more detail in the following by referring to Examples, which are not to be construed as limitative. The analysis by high performance liquid chromatography (hereinafter to be abbreviated as HPLC) was performed under the following conditions.
column: capsulefacial mask C8DD 4.6 mm×150 mm
mobile phase: acetonitrile-water (gradient)
detection wavelength: 220 nm

### Reference Example 1

To a solution of 1-(4-chlorophthalazin-1-yl)-naphthalen-2-ol (4 kg) in a mixed solvent of pyridine (3.1 kg) and xylene (34.4 kg) was added dropwise trifluoromethanesulfonic anhydride (4.24 kg) over 30 min at 15 to 25°C. The obtained mixture was stirred at 15 to 25°C for 28.5 hr. After confirmation of the completion of the reaction by HPLC, 10 wt% aqueous potassium carbonate solution (20 kg) was added dropwise to the reaction mixture at 10 to 20°C. The obtained mixture was stirred, stood still, and partitioned. The obtained organic layer was washed with water (20 kg), and concentrated at 60°C under reduced pressure. To the obtained residue was added xylene (5.16 kg) to give a solution containing compound (7). The obtained solution was analyzed by HPLC and found to contain 5.72 kg of compound (7).

### Reference Example 2

To the solution containing 5.72 kg of compound (7), which was obtained in the aforementioned Reference Example 1, was added (R)-1-phenylethylamine (4.75 kg). The obtained mixture was stirred at 135 to 140°C for 23 hr. The obtained mixture was allowed to cool to 60°C, and water (16 kg) was added dropwise thereto. To the obtained mixture was added dropwise heptane (27.4 kg) at 50 to 60°C. The obtained mixture was stirred at 50 to 60°C for 30 min, and allowed to cool to 18°C. The precipitated crystals were isolated by filtration, washed with a mixed solvent of xylene (9.84 kg) and heptane (7.82 kg), and dried to give compound (5) (5.45 kg).
¹H-NMR(300MHz, CDCl₃) δ: 1.79(t, J =6.7Hz, 6H), 5.49(d, J=7.0Hz, 2H), 5.88(quint, J=6.8Hz, 2H), 7.13-7.65(m, 22H), 7.73-7.82(m, 2H), 7.85-7.90(m, 2H), 7.94-8.00(m, 2H), 8.08(d, J=9.1Hz, 2H) ¹³C-NMR (100MHz, CDCl₃) δ: 21.9, 22.0, 50.7, 50.7, 117.8, 117.8, 118.0(q, J_{CF}=320), 118.7(q, J_{CF}=320), 119.4, 119.5, 120.8, 126.1, 126.1, 126.4, 126.5, 126.7, 126.7, 127.1, 127.2, 127.2, 127.4, 127.5, 127.5, 127.7, 128.1, 128.2, 128.5, 128.6, 131.3, 131.3, 131.4, 131.4, 131.4, 131.5, 132.5, 132.5, 133.6, 133.6, 144.0, 144.3, 145.5, 145.6, 146.5, 146.5, 152.7, 152.8 HRMS (MALDI) calcd. for C₂₇H₂₁F₃N₃O₃S [M+H]⁺ 524.1250,
found 524.1258
Anal. Calcd for C₂₇H₂₀F₃N₃O₃S: C, 61.94; H, 3.85; N, 8.03
Found: C, 62.15; H, 3.99; N, 7.79

### Example 1

To N,N-dimethylformamide (11 mL) were added (diphenylphosphinoethane)dichloronickel (0.10 g) and diphenylphosphine (1.4 g). To the obtained solution was added at 130°C a solution obtained by dissolving compound (5) (2.0 g) obtained in the aforementioned Reference Example 2 and 1,4-diazabicyclo[2.2.2]octane (1.7 g) in N,N-dimethylformamide (11 mL). The obtained mixture was stirred at 130°C for 2 hr to give a reaction solution containing (R,M)-N-PINAP and (R,P)-N-PINAP.
The obtained reaction solution was allowed to cool to about 70°C, and water (6.1 mL) was added dropwise thereto. The obtained mixture was allowed to cool to 20°C, and stirred for 30 min. The precipitated crystals were isolated by filtration, washed with isopropanol (6.8 mL), and dried to give crystals (0.66 g) of (R,M)-N-PINAP. As a result of HPLC analysis, the purity was 95%, and the (R,M)/(R,P) ratio was 100/0.
mp: > 210 °C
[α]_{D}²⁹= -162.0 (c=0.54, CHCl₃).
¹H-NMR (400MHz, CDCl₃) δ: 1.68(d, J=6.8Hz, 3H), 5.34(d, J=7.2Hz, 1H), 5.81(quint, J=6.9Hz, 1H), 7.01(d, J =8.1Hz, 1H), 7.11-7.18(m, 5H), 7.18-7.24(m, 8H), 7.28-7.33(m, 3H), 7.36-7.43(m, 2H), 7.50-7.53(m, 2H), 7.55-7.59(m, 1H), 7.70(d, J=8.3Hz, 1H), 7.79-7.84(m, 2H).
¹³C-NMR (100 MHz)δ: 22.2(CH₃), 50.4(CH), 117.7(C), 120.3(CH), 126.5(CH), 126.7(CH), 126.8(CH), 126.8(CH), 126.9(CH), 126.9(CH), 127.2(CH), 127.8(CH), 128.0(CH), 128.2(CH), 128.2(CH), 128.2(CH), 128.3(CH), 128.3(C), 128.3(C), 128.4(CH), 128.6(CH), 128.8(CH), 130.1(CH), 130.7(CH), 130.8(CH), 133.1(CH), 133.2(C), 133.3(CH), 133.3(C), 133.6(C), 133.7(CH), 133.9(CH), 135.8(C), 136.0(C), 137.3(C), 137.4(C), 137.7(C), 137.8(C), 141.8(C), 142.1(C), 144.6(C), 152.2(C), 152.5(C), 152.6(C).
³¹P-NMR (121 MHz, CDCl₃) δ: -13.18.
FTIR(thin film, cm⁻¹) : 3351(br, s), 1654(w), 1559(w), 1508(s), 1420(w), 1361(w), 1217(w), 820(w), 772(s), 698(m). HRMS(MALDI) calcd. for C₃₈H₃₁N₃P⁺[M+H]⁺ 560.2250. found 560.2257. Anal. Calcd for C₃₈H₃₀N₃P: C, 81.55; H, 5.40; N, 7.51; P, 5.53. Found: C, 81.44; H, 5.52; N, 7.39; P, 5.67.

### Example 2

The filtrate and the solution obtained by washing the crystals, which had been obtained in Example 1, were mixed, and methyl isobutyl ketone (14 mL) and water (13 mL) were added thereto. The obtained mixture was stirred, and partitioned. The obtained organic layer was washed with water (8 mL), and concentrated at 30 to 60°C under reduced pressure. To the obtained residue was added tetrahydrofuran (15 mL). The obtained solution was analyzed by HPLC and found to contain a mixture (0.70 g) of (R,P)-N-PINAP and (R,M)-N-PINAP. The (R,M)/(R,P) ratio was 40/60.
To the obtained solution was added (S)-camphorsulfonic acid (0.35 g) at about 50°C. The obtained mixture was stirred at the same temperature for 1 hr, allowed to cool to 28°C, and stirred for 1 hr. The precipitated crystals were isolated by filtration, washed with tetrahydrofuran (8 mL), and dried to give a salt (0.78 g) of (R,P)-N-PINAP with (S)-camphorsulfonic acid. As a result of HPLC analysis, the (R,M)/(R,P) ratio was 0/100.
mp: 213°C
¹H-NMR (400MHz, DMSO-d₆) δ: 0.73(s, 3H), 1.05(s, 3H), 1.22-1.31(m, 2H), 1.73-1.81(m, 5H), 1.92(t, J=4.4Hz, 1H), 2.23(dt, J=18.1, 3.9Hz, 1H), 2.39(d, J=14.6Hz, 1H), 2.69-2.75(m, 1H), 2.87-2.91(m, 1H), 5.51(dt, J=6.9Hz, 1H), 7.01(dd, J=7.6Hz, 2H), 7.11(dd, J=7.8Hz, 2H), 7.21-7. 40(m, 10H), 7.46-7.50(m, 4H), 7.58-7.60(m, 2H), 7.66(dt, J=8.3, 3.9Hz, 1H), 7.95(dd, J=7.6Hz, 1H), 8.09(d, J=8.3Hz, 1H), 8.15-8.20(m, 2H), 9.07(d, J=8.3Hz, 1H), 10.02(br, 1H).

### Example 3

The filtrate and the solution obtained by washing the crystals, which had been obtained in the same manner as in Example 1, were mixed, and methyl isobutyl ketone (225 mL) and water (100 mL) were added thereto. The obtained mixture was stirred, and partitioned. The obtained organic layer was washed with water (100 mL). The obtained solution was analyzed by HPLC and found to contain a mixture (8.5 g) of (R,P)-N-PINAP and (R,M)-N-PINAP. The (R,M)/(R,P) ratio was 25/75.
To the obtained solution was added (S)-camphorsulfonic acid (4.2 g) at about 50°C. The obtained mixture was stirred at the same temperature for 1 hr, allowed to cool to 23°C, and stirred for 2 hr. The precipitated crystals were isolated by filtration, washed with methyl isobutyl ketone (25 mL), and dried to give a salt (6.8 g) of (R,P)-N-PINAP with (S)-camphorsulfonic acid. As a result of HPLC analysis, the (R,M)/(R,P) ratio was 0/100.

### Example 4

The salt (2.33 g) of (R,P)-N-PINAP with (S)-camphorsulfonic acid obtained in Example 3 was added to toluene (30 mL). To the obtained mixture was added dropwise a solution obtained by dissolving sodium hydroxide (0.13 g) in water (26.4 g). The obtained mixture was stirred at 24°C for 1.5 hr, and partitioned. The obtained organic layer was washed with water (10 g), and concentrated at 30 to 60°C under reduced pressure to remove toluene (23.5 mL). To the obtained concentrate was added dropwise heptane (1.5 mL) at about 50°C, and the obtained mixture was stirred at 25°C for 1 hr. The crystals were isolated by filtration, washed with a mixed solvent of toluene (4.3 mL) and heptane (1 mL), and dried to give (R,P)-N-PINAP (1.33 g). As a result of HPLC analysis, the (R,M)/(R,P) ratio was 0/100.
mp: 185-188°C
[α]_{D}²⁶= +127.3 (c=0.39, CHCl₃).
¹H-NMR (300MHz, CDCl₃) δ: 1.78(d, J=6.7Hz, 3H), 5.41(d, J=6.9Hz, 1H), 5.85(quint, J=6.7Hz, 1H), 7.09(d, J =8.1Hz, 1H), 7.13-7.52(m, 18H), 7.56-7.67(m, 3H), 7.80(d, J=8.3Hz, 1H), 7.86-7.91(m, 2H).
¹³C-NMR (75 MHz) δ: 21.9(CH₃), 50.6(CH), 117.5(C), 120.2(CH), 126.3(CH), 126.5(CH), 126.6(CH), 127.1(CH), 127.7(CH), 127.9(CH), 128.0(CH), 128.0(CH), 128.0(CH), 128.1(CH), 128.5(CH), 128.6(CH), 129.9(CH), 130.6(CH), 130.6(CH), 133.1(CH), 133.1(CH), 133.3(CH), 133.4 (CH), 133.4(C), 133.7(CH), 135.9(C), 136.1(C), 136.9(C), 137.0(C), 137.4(C), 137.6(C), 141.3(C), 141.7(C), 144.2(C), 152.1(C), 152.3(C), 152.3(C).
³¹P-NMR (121 MHz, CDCl₃) δ: -12.77.
FTIR(thin film, cm⁻¹): 3347 (br, s), 3056(m), 1615(w), 1558(w), 1508(s), 1434(w), 1366(w), 1215(w), 817(s), 744(m), 696(s). HRMS(MALDI) calcd. for C₃₈H₃₁N₃P+[M+H]+ 560.2250. found 560.2249. Anal. Calcd for C₃₈H₃₀N₃P: C, 81.55; H, 5.40; N, 7.51; P, 5.53. Found: C, 81.44; H, 5.41; N, 7.39.

The crystals (36.2 g) (purity 92%) of (R,P)-N-PIANP obtained by the same method as the above-mentioned method were added to acetonitrile (290 mL) and dissolved by heating the mixture. The obtained solution was allowed to cool to 19°C. The precipitated crystals were isolated by filtration, and dried at about 40°C under reduced pressure to give (R,P)-N-PIANP (21.7 g). The purity was 99.7%.

### Example 5

To a solution obtained by dissolving (Diphenylphosphinoethane)dichloronickel (100 mg) in N,N-dimethylformamide (10 mL) was added diphenylphosphine (1.45 g) at 23°C. The obtained mixture was stirred at 118 to 122°C for 0.5 hr. Then a solution obtained by dissolving compound (5) (2 g) obtained in Reference Example 2 and 1,4-diazabicyclo[2.2.2]octane (1.73 g) in N,N-dimethylformamide (10 mL) was added thereto. The obtained solution was stirred at 118 to 122°C for 5 hr to give a reaction solution containing (R,M)-N-PINAP and (R,P)-N-PINAP. To the obtained reaction solution was added dropwise water (4 mL) at 85°C, and the mixture was allowed to cool to 28°C, and stirred for 1 hr. The precipitated crystals were isolated by filtration to give primary crystals (0.68 g) of (R,M)-N-PINAP. To the filtrate was added water (5 mL) to give secondary crystals (0.38 g) of (R,M)-N-PINAP. As a result of HPLC analysis, the purity of the primary crystals was 95% and the (R,M)/(R,P) ratio thereof was 99/1, and the purity of the secondary crystals was 83% and the (R,M)/(R,P) ratio thereof was 87/13.

### Example 6

A mixture (2.51 g) of (R,M)-N-PINAP and (R,P)-N-PIANP ((R,M)/(R,P) ratio = about 50/50)) was dissolved in tetrahydrofuran (30 mL) by heating. To the obtained solution was added (S)-camphorsulfonic acid (1.04 g) at 50°C, and the mixture was stirred at 40 to 50°C. The precipitated crystals were isolated by filtration, and washed with tetrahydrofuran (7.5 mL) to give crystals (1.56 g) of (R,P)-N-PINAP. As a result of HPLC analysis, the (R,P)/(R,M) ratio was 96/4.

### Reference Example 3

To a solution (388.50 g) containing compound (7), which was obtained in the same manner as in Reference Example 1, was added (S)-1-phenylethylamine (35.6 g). The obtained mixture was stirred at 135 to 140°C for 16 hr, and allowed to cool to 60°C. To the obtained mixture was added dropwise water (120 mL), and then heptane (150 mL) was added dropwise thereto at 50°C, and the mixture was allowed to cool to 22°C. The precipitated crystals were isolated by filtration, washed successively with a mixed solvent of xylene (40 mL) and heptane (40 mL), and water (120 mL), and dried to give compound (6) (32.1 g). yield 62%.
mp: 200°C
¹H-NMR(400MHz, CDCl₃) δ: 1.72(t, J =6.7Hz, 6H), 5.68(d, J=7.0Hz, 2H), 5.83(quint, J=6.8Hz, 2H), 7.06-7.58(m, 22H), 7.72-7.74(m, 2H), 7.90-7.95(m, 4H), 8.05(d, J=8.8Hz, 2H).

### Example 7

To N,N-dimethylformamide (18 mL) were added (diphenylphosphinoethane)dichloronickel (0.18 g) and diphenylphosphine (2.6 g). To the obtained solution was added at 128 to 134°C a solution obtained by dissolving compound (6) (3.5 g) obtained in Reference Example 3 and 1,4-diazabicyclo[2.2.2]octane (3.0 g) in N,N-dimethylformamide (19 mL). The obtained mixture was stirred at 132°C for 3 hr to give a reaction solution containing (S,M)-N-PINAP and (S,P)-N-PINAP. The obtained reaction solution was analyzed by HPLC. As a result, the (S,M)/(S,P) ratio was 46/54. To the solution was added dropwise water (10 mL) at about 60°C, and the mixture was allowed to cool to 23°C, and stirred for 13 hr. The precipitated crystals were isolated by filtration, washed with isopropanol (12 mL), and dried to give (S,P)-N-PINAP (1.01 g). yield 27%. As a result of HPLC analysis, the purity was 92%, and the (S,M)/(S,P) ratio was 1/99.
mp: not less than 210°C
¹H-NMR (400MHz, CDCl₃) δ: 1.74(d, J=6.8Hz, 3H), 5.42(d, J=7.2Hz, 1H), 5.84(quint, J=6.9Hz, 1H), 7.06(d, J=8.3Hz, 1H), 7.17-7.22(m, 5H), 7.26-7.30(m, 8H), 7.35-7.39(m, 3H), 7.40-7.48(m, 2H), 7.56-7.58(m, 2H), 7.62-7.66(m, 1H), 7.84(d, J=8.3Hz, 1H), 7.85-7.89(m, 2H).

### Example 8

To N,N-dimethylformamide (100 mL) were added (diphenylphosphinoethane)dichloronickel (1.01 g) and diphenylphosphine (14.3 g). To the obtained solution was added at 124°C a solution obtained by dissolving compound (6) (20 g) obtained in Reference Example 3 and 1,4-diazabicyclo[2.2.2]octane (17.1 g) in N,N-dimethylformamide (110 mL). The obtained mixture was stirred at 124°C for 3.5 hr to give a reaction solution containing (S,M)-N-PINAP and (S,P)-N-PINAP. The obtained reaction solution was analyzed by HPLC. As a result, the (S,M)/(S,P) ratio was 41/59. To the solution was added dropwise water (81 mL) at about 60°C, and the mixture was allowed to cool to 22°C, and stirred for 1 hr. The precipitated crystals were isolated by filtration, washed with isopropanol (136 mL), and dried to give (S,P)-N-PINAP (6.46 g). yield 30%. As a result of HPLC analysis, the purity was 94%, and the (S,M)/(S,P) ratio was 1/99.

### Example 9

The filtrate obtained by filtration of the crystals of (S,P)-N-PINAP, and the solution obtained by washing the crystals, which had been obtained in Example 8, were mixed. To the obtained solution were added methyl isobutyl ketone (240 mL) and water (180 mL). The obtained mixture was stirred, and partitioned. The obtained organic layer was washed with water (190 mL), and concentrated at 30 to 60°C under reduced pressure. To the obtained residue was added tetrahydrofuran (100 mL). As a result of HPLC analysis, the solution was found to contain a mixture (3.2 g) of (S,P)-N-PINAP and (S,M)-N-PINAP
((S,M)/(S,P) ratio = 86/14).
To this solution was added (R)-camphorsulfonic acid (2 g) at about 50°C. The obtained mixture was stirred at the same temperature for 3 hr, allowed to cool to 23°C, and stirred for 1 hr. The precipitated crystals were isolated by filtration, washed with tetrahydrofuran (40 mL), and dried to give a salt (3.5 g) of (S,M)-N-PINAP with (R)-camphorsulfonic acid. As a result of HPLC analysis, the (S,M)/(S,P) ratio was 99.9/0.1. ¹H-NMR (400MHz, DMSO-d₆) 5: 0.73(s, 3H), 1.05(s, 3H), 1.22-1.32(m, 2H), 1.74-1.83(m, 5H), 1.92(t, J=4.4Hz, 1H), 2.23(dt, J=18.1, 3.9Hz, 1H), 2.39(d, J=14.6Hz, 1H), 2.69-2.75(m, 1H), 2.87-2.91(m, 1H), 5.52(dt, J=6.9Hz, 1H), 7.01(dd, J=7.8Hz, 2H), 7.11(dd, J=7.8Hz, 2H), 7.21-7. 40(m, 10H), 7.46-7.50(m, 4H), 7.58-7.60(m, 2H), 7.66(dt, J=8.3, 3.9Hz, 1H), 7.95(dd, J=7.6Hz, 1H), 8.09(d, J=8.3Hz, 1H), 8.15-8.20(m, 2H), 9.07(d, J=8.3Hz, 1H), 10.02(br, 1H).

### Example 10

To toluene (40 mL) was added the salt (3.3 g) of (S,M)-N-PINAP with (R)-camphorsulfonic acid obtained in Example 9. To the obtained mixture was added dropwise a solution obtained by dissolving sodium hydroxide (0.18 g) in water (35 mL). The obtained mixture was stirred at 24°C for 1.5 hr, and partitioned. The obtained organic layer was washed with water (15 mL), and concentrated at 30 to 60°C under reduced pressure to remove toluene. To the obtained residue were added dropwise methyl ethyl ketone (8.5 mL) and heptane (2.5 mL) at about 50°C, and the obtained mixture was stirred at 25°C for 1 hr. The crystals were isolated by filtration, washed with a mixed solvent of toluene (3.5 mL) and heptane (1 mL), and dried to give (S,M)-N-PINAP (1.4 g). As a result of HPLC analysis, the purity was 97%, and the (S,M)/(S,P) ratio was 100/0. mp: not less than 210°C
¹H-NMR (400MHz, CDCl₃) δ: 1.76(d, J=6.7Hz, 3H), 5.37(d, J=6.7Hz, 1H), 5.82(quint, J=6.7Hz, 1H), 7.08(d, J=8.3Hz, 1H), 7.12-7.49(m, 18H), 7.56-7.65(m, 3H), 7.78(d, J=8.3Hz, 1H), 7.86-7.88(m, 2H).

### Industrial Applicability

According to the present invention, optically active [4-(2-diphenylphosphanylnaphthalen-1-yl)phthalazin-1-yl]-(1-phenylethyl)amines can be obtained without separation by column chromatography.

This application is based on patent application No. 2008-009692 filed in Japan, the contents of which are encompassed in full herein.

## Claims

1. A salt of an optically active [4-(2-diphenylphosphanylnaphthalen-1-yl)phthalazin-1-yl]-(1-phenylethyl)amine with an optically active organic sulfonic acid.

2. The salt of claim 1, wherein the optically active [4-(2-diphenylphosphanylnaphthalen-1-yl)phthalazin-1-yl]-(1-phenylethyl)amine is an optically active amine represented by formula (1) or formula (2):

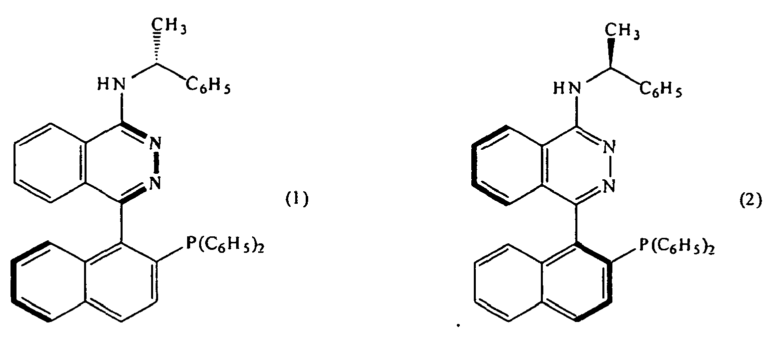

3. The salt of claim 2, wherein the amine is represented by formula (1) and the optically active organic sulfonic acid is (S)-camphorsulfonic acid.

4. The salt of claim 2, wherein the amine is represented by formula (2) and the optically active organic sulfonic acid is (R)-camphorsulfonic acid.

5. A method of producing an optically active amine or a salt of an optically active amine selected from methods (A), (B), (C), (D) and (E) wherein:
method (A) is a method of producing a salt of an optically active amine represented by the formula (1): 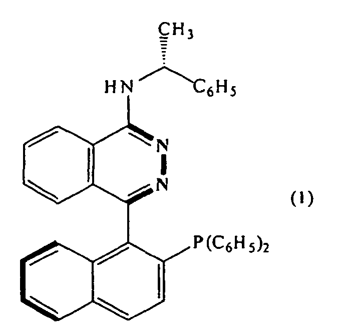 with an optically active organic sulfonic acid, which comprises mixing a solution containing the optically active amine represented by the formula (1) and an optically active amine represented by the formula (3): 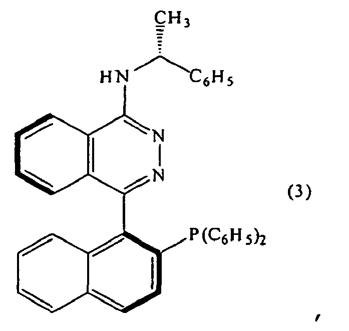 with an optically active organic sulfonic acid;
method (B) is a method of producing a salt of an optically active amine represented by the formula (2): 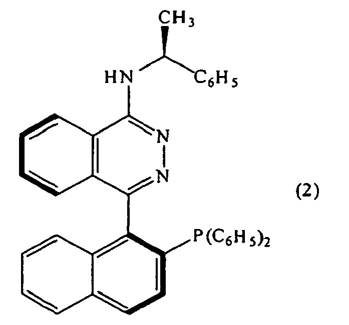 with an optically active organic sulfonic acid, which comprises mixing a solution containing the optically active amine represented by the formula (2) and an optically active amine represented by the formula (4): 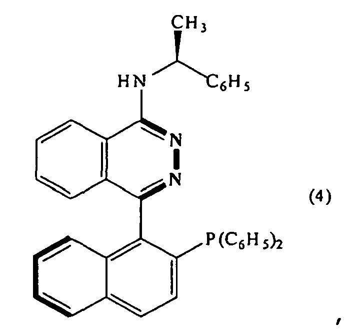 with an optically active organic sulfonic acid;
method (C) is a method of producing an optically active amine represented by the formula (3): 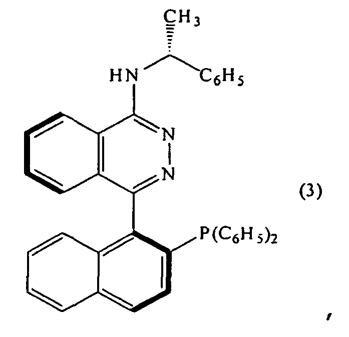 which comprises mixing a solution containing an optically active amine represented by the formula (1): 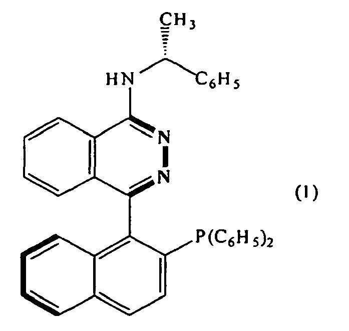 and the optically active amine represented by the formula (3) in a hydrophilic organic solvent, with water;
method (D) is a method of producing an optically active amine represented by the formula (4): 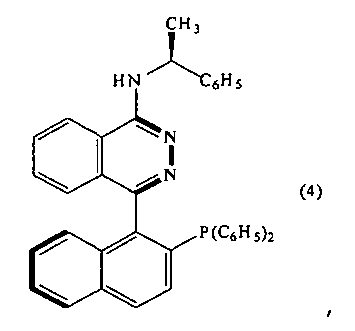 which comprises mixing a solution containing an optically active amine represented by the formula (2): 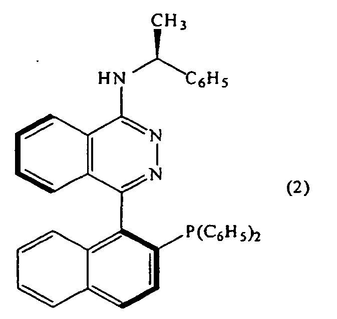 and the optically active amine represented by the formula (4) in a hydrophilic organic solvent, with water; and
method (E) is a method of producing an optically active [4-(2-diphenylphosphanylnaphthalen-1-yl)phthalazin-1-yl]-(1-phenylethyl)amine, which comprises reacting a salt of an optically active [4-(2-diphenylphosphanylnaphthalen-1-yl)phthalazin-1-yl]-(1-phenylethyl)amine with an optically active organic sulfonic acid, with a base.

6. The method of claim 5, wherein the method is method (A) and the amount of the optically active organic sulfonic acid to be used is 0.5 to 5 mol per 1 mol of the total of the optically active amine represented by the formula (1) and the optically active amine represented by the formula (3).

7. The method of claim 5, wherein the method is method (B) and the amount of the optically active organic sulfonic acid to be used is 0.5 to 5 mol per 1 mol of the total of the optically active amine represented by the formula (2) and the optically active amine represented by the formula (4).

8. The method of claim 5, wherein the method is method (A) and the optically active organic sulfonic acid is (S)-camphorsulfonic acid.

9. The method of claim 5, wherein the method is method (B) and the optically active organic sulfonic acid is (R)-camphorsulfonic acid.

10. The method of claim 5, wherein the method is method (A) or (B) and the solution is an ether solution or a ketone solution.

11. The method of claim 5, wherein the method is method (C), and the solution is a reaction solution obtainable by reacting a compound represented by the formula (5): 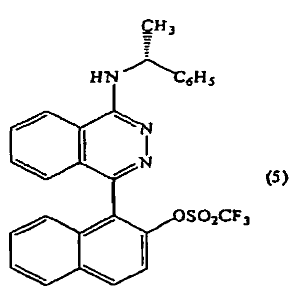 with diphenylphosphine in a hydrophilic organic solvent, in the presence of a transition metal complex and a tertiary amine.

12. The method of claim 5, wherein the method is method (D), and the solution is a reaction solution obtainable by reacting a compound represented by the formula (6): 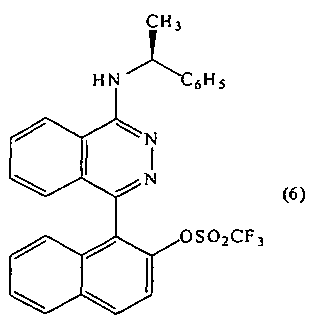 with diphenylphosphine in a hydrophilic organic solvent, in the presence of a transition metal complex and a tertiary amine.

13. The method of claim 5, wherein the method is method (C) or (D) and the amount of the water to be used is 0.1 to 0.5 part by weight per 1 part by weight of the hydrophilic organic solvent.

14. The method of claim 5, wherein the method is method (C) or (D) and the hydrophilic organic solvent is a hydrophilic aprotic polar solvent.

15. The method of claim 11 or 12, wherein the transition metal complex is a divalent nickel complex containing a phosphine compound.

## Patentansprüche

1. Salz eines optisch aktiven [4-(2-Diphenylphosphanylnaphthalin-1-yl)-phthalazin-1-yl](1-phenylethyl)amins mit einer optisch aktiven organischen Sulfonsäure.

2. Salz gemäß Anspruch 1, wobei das optisch aktive [4-(2-Diphenylphos-phanylnaphthalin-1-yl)phthalazin-1-yl](1-phenylethyl)amin ein optisch aktives Amin ist, das durch Formel (1) oder Formel (2) dargestellt wird:

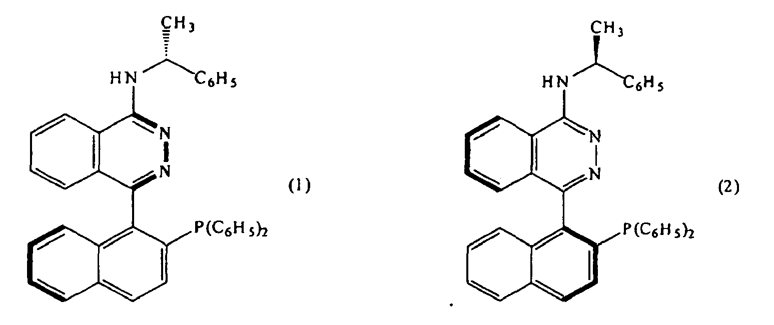

3. Salz gemäß Anspruch 2, wobei das Amin durch Formel (1) dargestellt wird und es sich bei der optisch aktiven organischen Sulfonsäure um (S)-Camphersulfonsäure handelt.

4. Salz gemäß Anspruch 2, wobei das Amin durch Formel (2) dargestellt wird und es sich bei der optisch aktiven organischen Sulfonsäure um (R)-Camphersulfonsäure handelt.

5. Verfahren zur Herstellung eines optisch aktiven Amins oder eines Salzes eines optisch aktiven Amins, das aus den Verfahren (A), (B), (C), (D) und (E) ausgewählt ist, wobei:
Verfahren (A) ein Verfahren zur Herstellung eines Salzes eines optisch aktiven Amins ist, das durch Formel (1) dargestellt wird: 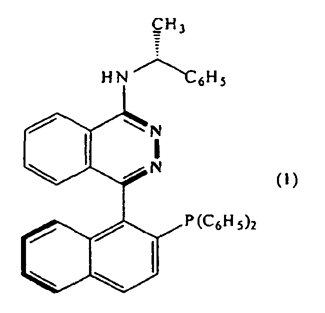 mit einer optisch aktiven organischen Sulfonsäure, umfassend das Mischen einer Lösung, die das durch die Formel (1) dargestellte optisch aktive Amin und ein durch die Formel (3) dargestelltes optisch aktives Amin enthält: 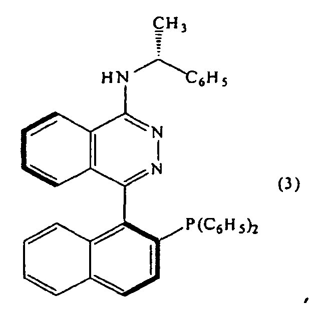 mit einer optisch aktiven organischen Sulfonsäure;
Verfahren (B) ein Verfahren zur Herstellung eines Salzes eines optisch aktiven Amins ist, das durch Formel (2) dargestellt wird: 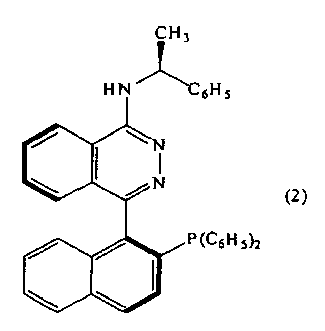 mit einer optisch aktiven organischen Sulfonsäure, umfassend das Mischen einer Lösung, die das durch die Formel (2) dargestellte optisch aktive Amin und ein durch die Formel (4) dargestelltes optisch aktives Amin enthält: 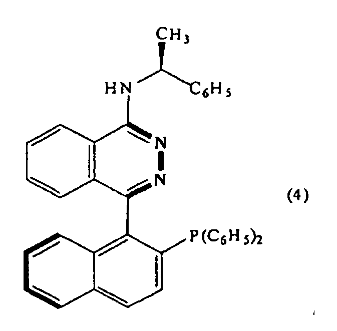 mit einer optisch aktiven organischen Sulfonsäure;
Verfahren (C) ein Verfahren zur Herstellung eines Salzes eines optisch aktiven Amins ist, das durch Formel (3) dargestellt wird: 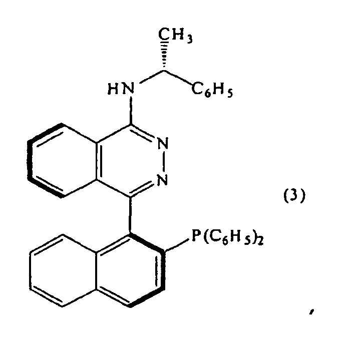 umfassend das Mischen einer Lösung, die ein durch die Formel (1) dargestelltes optisch aktives Amin: 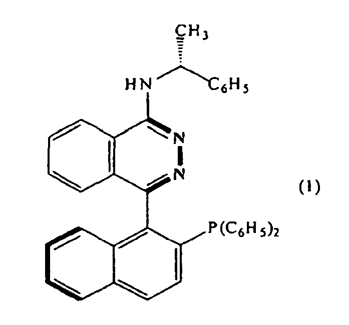 und das durch die Formel (3) dargestellte optisch aktive Amin in einem hydrophilen organischen Lösungsmittel enthält, mit Wasser;
Verfahren (D) ein Verfahren zur Herstellung eines optisch aktiven Amins ist, das durch Formel (4) dargestellt wird: 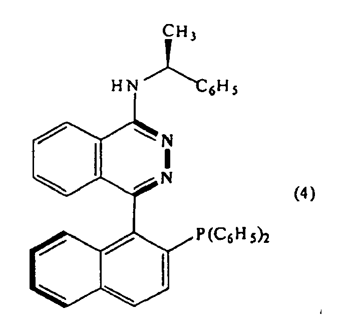 umfassend das Mischen einer Lösung, die ein durch die Formel (2) dargestelltes optisch aktives Amin: 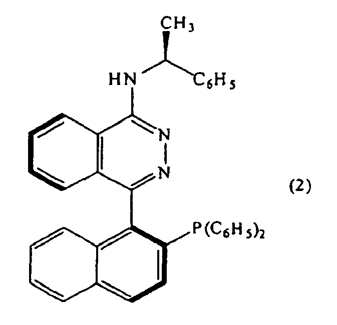 und das durch die Formel (4) dargestellte optisch aktive Amin in einem hydrophilen organischen Lösungsmittel enthält, mit Wasser; und
Verfahren (E) ein Verfahren zur Herstellung eines optisch aktiven [4-(2-Diphenylphosphanylnaphthalin-1-yl)phthalazin-1-yl](1-phenylethyl)amins ist, umfassend das Umsetzen eines Salzes eines optisch aktiven [4-(2-Diphenylphosphanylnaphthalin-1-yl)phthalazin-1-yl](1-phenylethyl)amins und einer optisch aktiven organischen Sulfonsäure mit einer Base.

6. Verfahren gemäß Anspruch 5, wobei es sich bei dem Verfahren um Verfahren (A) handelt und die zu verwendende Menge der optisch aktiven organischen Sulfonsäure 0,5 bis 5 mol pro Mol der Gesamtmenge des durch die Formel (1) dargestellten optisch aktiven Amins und des durch die Formel (3) dargestellten optisch aktiven Amins beträgt.

7. Verfahren gemäß Anspruch 5, wobei es sich bei dem Verfahren um Verfahren (B) handelt und die zu verwendende Menge der optisch aktiven organischen Sulfonsäure 0,5 bis 5 mol pro Mol der Gesamtmenge des durch die Formel (2) dargestellten optisch aktiven Amins und des durch die Formel (4) dargestellten optisch aktiven Amins beträgt.

8. Verfahren gemäß Anspruch 5, wobei es sich bei dem Verfahren um Verfahren (A) handelt und es sich bei der optisch aktiven organischen Sulfonsäure um (S)-Camphersulfonsäure handelt.

9. Verfahren gemäß Anspruch 5, wobei es sich bei dem Verfahren um Verfahren (B) handelt und es sich bei der optisch aktiven organischen Sulfonsäure um (R)-Camphersulfonsäure handelt.

10. Verfahren gemäß Anspruch 5, wobei es sich bei dem Verfahren um Verfahren (A) oder (B) handelt und die Lösung eine Etherlösung oder eine Ketonlösung ist.

11. Verfahren gemäß Anspruch 5, wobei es sich bei dem Verfahren um Verfahren (C) handelt und die Lösung eine Reaktionslösung ist, die durch Umsetzen einer Verbindung, die durch die Formel (5) 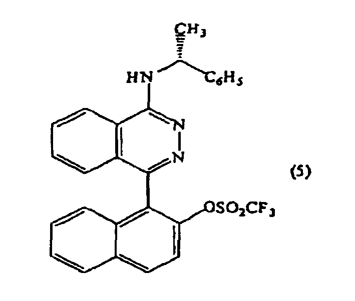 dargestellt wird, mit Diphenylphosphin in einem hydrophilen organischen Lösungsmittel in Gegenwart eines Übergangsmetallkomplexes und eines tertiären Amins erhältlich ist.

12. Verfahren gemäß Anspruch 5, wobei es sich bei dem Verfahren um Verfahren (D) handelt und die Lösung eine Reaktionslösung ist, die durch Umsetzen einer Verbindung, die durch die Formel (6) 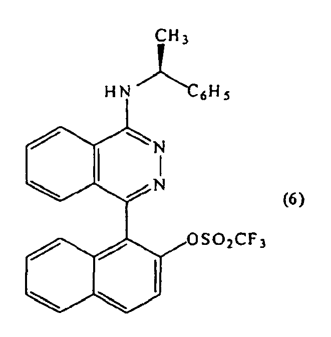 dargestellt wird, mit Diphenylphosphin in einem hydrophilen organischen Lösungsmittel in Gegenwart eines Übergangsmetallkomplexes und eines tertiären Amins erhältlich ist.

13. Verfahren gemäß Anspruch 5, wobei es sich bei dem Verfahren um Verfahren (C) oder (D) handelt und die zu verwendende Menge des Wassers 0,1 bis 0,5 Gewichtsteile pro Gewichtsteil des hydrophilen organischen Lösungsmittels beträgt.

14. Verfahren gemäß Anspruch 5, wobei es sich bei dem Verfahren um Verfahren (C) oder (D) handelt und das hydrophile organische Lösungsmittel ein hydrophiles aprotisches polares Lösungsmittel ist.

15. Verfahren gemäß Anspruch 11 oder 12, wobei der Übergangsmetallkomplex ein Komplex von zweiwertigem Nickel ist, der eine Phosphinverbindung enthält.

## Revendications

1. Sel d'une [4-(2-diphénylphosphanylnaphtalén-1-yl)phtalazin-1-yl]-(1-phényléthyl)amine optiquement active avec un acide sulfonique organique optiquement actif.

2. Sel selon la revendication 1, dans lequel la [4-(2-diphénylphosphanylnaphtalén-1-yl)phtalazin-1-yl]-(1-phényléthyl)amine optiquement active est une amine optiquement active représentée par la formule (1) ou la formule (2) :

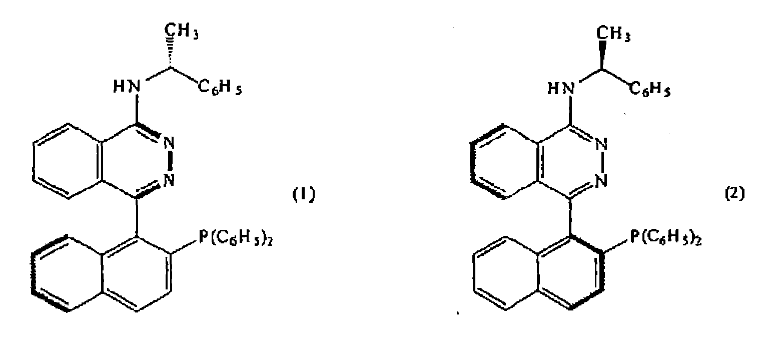

3. Sel selon la revendication 2, dans lequel l'amine est représentée par la formule (1) et l'acide sulfonique organique optiquement actif est de l'acide (S)-camphosulfonique.

4. Sel selon la revendication 2, dans lequel l'amine est représentée par la formule (2) et l'acide sulfonique organique optiquement actif est de l'acide (R)-camphosulfonique.

5. Procédé de production d'une amine optiquement active ou d'un sel d'une amine optiquement active choisi parmi les procédés (A), (B), (C), (D) et (E) dans lesquels :
le procédé (A) est un procédé de production d'un sel d'une amine optiquement active représentée par la formule (1) : 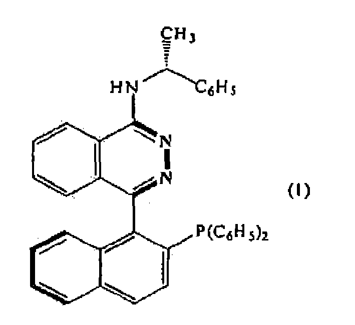 avec un acide sulfonique organique optiquement actif, qui comprend le mélange d'une solution contenant l'amine optiquement active représentée par la formule (1) et une amine optiquement active représentée par la formule (3) : 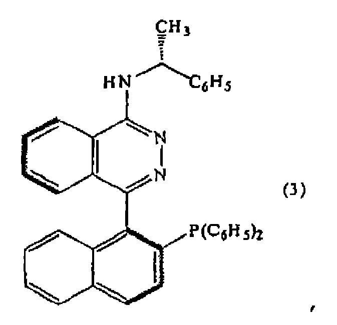 avec un acide sulfonique organique optiquement actif ;
le procédé (B) est un procédé de production d'un sel d'une amine optiquement active représentée par la formule (2) : 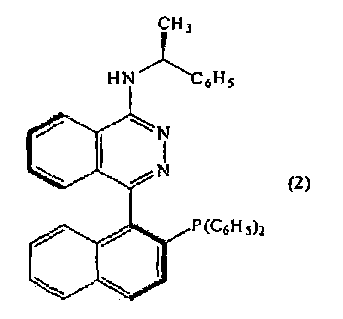 avec un acide sulfonique organique optiquement actif, qui comprend le mélange d'une solution contenant l'amine optiquement active représentée par la formule (2) et une amine optiquement active représentée par la formule (4) : 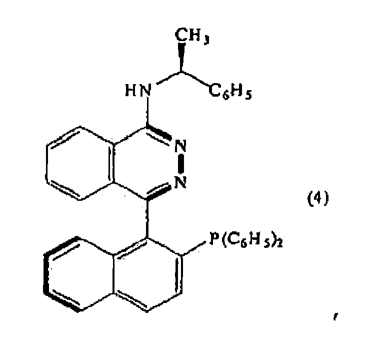 avec un acide sulfonique organique optiquement actif ;
le procédé (C) est un procédé de production d'une amine optiquement active représentée par la formule (3) : 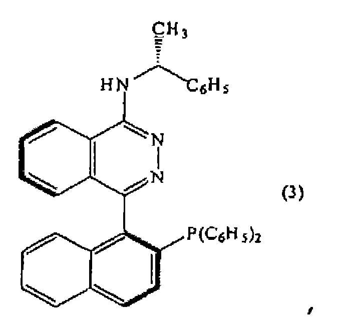 qui comprend le mélange d'une solution contenant une amine optiquement active représentée par la formule (1) : 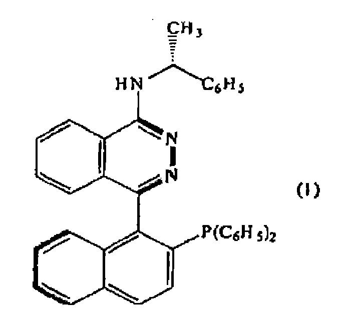 et l'amine optiquement active représentée par la formule (3) dans un solvant organique hydrophile, avec de l'eau ;
le procédé (D) est un procédé de production d'une amine optiquement active représentée par la formule (4) : 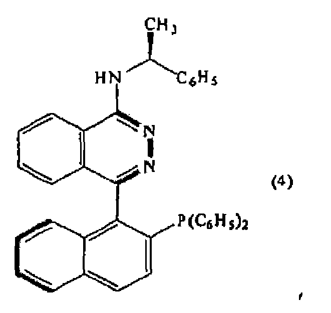 qui comprend le mélange d'une solution contenant une amine optiquement active représentée par la formule (2) : 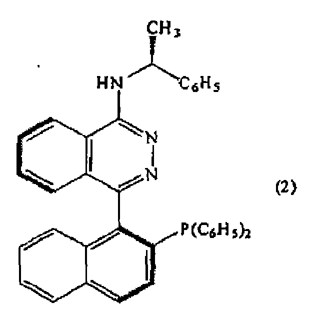 et l'amine optiquement active représentée par la formule (4) dans un solvant organique hydrophile, avec de l'eau ; et
le procédé (E) est un procédé de production d'une [4-(2-diphénylphosphanylnaphtalén-1-yl)phtalazin-1-yl]-(1-phényléthyl)amine optiquement active, qui comprend la réaction d'un sel d'une [4-(2-diphénylphosphanylnaphtalén-1-yl)phtalazin-1-yl]-(1-phényléthyl)amine optiquement active avec un acide sulfonique organique optiquement actif, avec une base.

6. Procédé selon la revendication 5, dans lequel le procédé est le procédé (A) et la quantité d'acide sulfonique organique optiquement actif à utiliser est de 0,5 à 5 moles pour 1 mole du total de l'amine optiquement active représentée par la formule (1) et de l'amine optiquement active représentée par la formule (3).

7. Procédé selon la revendication 5, dans lequel le procédé est le procédé (B) et la quantité d'acide sulfonique organique optiquement actif à utiliser est de 0,5 à 5 moles pour 1 mole du total de l'amine optiquement active représentée par la formule (2) et de l'amine optiquement active représentée par la formule (4).

8. Procédé selon la revendication 5, dans lequel le procédé est le procédé (A) et l'acide sulfonique organique optiquement actif est de l'acide (S)-camphosulfonique.

9. Procédé selon la revendication 5, dans lequel le procédé est le procédé (B) et l'acide sulfonique organique optiquement actif est de l'acide (R)-camphosulfonique.

10. Procédé selon la revendication 5, dans lequel le procédé est le procédé (A) ou (B) et la solution est une solution d'éther ou une solution de cétone.

11. Procédé selon la revendication 5, dans lequel le procédé est le procédé (C), et la solution est une solution réactionnelle pouvant être obtenue en faisant réagir un composé représenté par la formule (5) : 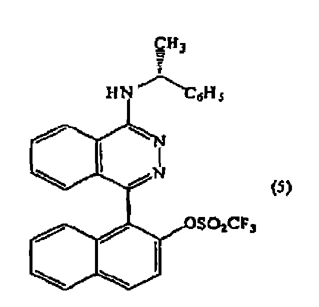 avec de la diphénylphosphine dans un solvant organique hydrophile, en présence d'un complexe de métaux de transition et d'une amine tertiaire.

12. Procédé selon la revendication 5, dans lequel le procédé est le procédé (D), et la solution est une solution réactionnelle pouvant être obtenue en faisant réagir un composé représenté par la formule (6) : 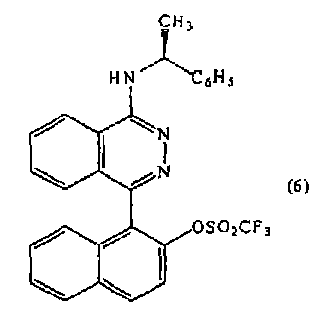 avec de la diphénylphosphine dans un solvant organique hydrophile, en présence d'un complexe de métaux de transition et d'une amine tertiaire.

13. Procédé selon la revendication 5, dans lequel le procédé est le procédé (C) ou (D) et la quantité d'eau à utiliser est de 0,1 à 0,5 partie en poids pour 1 partie en poids de solvant organique hydrophile.

14. Procédé selon la revendication 5, dans lequel le procédé est le procédé (C) ou (D) et le solvant organique hydrophile est un solvant polaire aprotique hydrophile.

15. Procédé selon la revendication 11 ou 12, dans lequel le complexe de métaux de transition est un complexe à base de nickel divalent contenant un composé phosphine.
